# EUROPEAN PATENT SPECIFICATION

(11) **EP 4 269 322 B1**
(45) Date of publication and mention of the grant of the patent: **22.04.2026**
(21) Application number: 22216738.9
(22) Date of filing: 27.12.2022
(51) Int. Cl.: B66F 9/065, B66F 9/075, B66F 17/00, B66C 15/04, B66C 15/06, B66C 23/94

(54) **ANTI-COLLISION DETECTION AND CONTROL METHOD AND SYSTEM, FORKLIFT SYSTEM, AND FORKLIFT**
ANTIKOLLISIONSERKENNUNGS- UND -STEUERUNGSVERFAHREN UND -SYSTEM, GABELSTAPLERSYSTEM UND GABELSTAPLER
PROCÉDÉ ET SYSTÈME DE DÉTECTION ET DE COMMANDE ANTI-COLLISION, SYSTÈME DE CHARIOT ÉLÉVATEUR À FOURCHE ET CHARIOT ÉLÉVATEUR À FOURCHE

(30) Priority: 27.04.2022 CN 202210455517
(43) Date of publication of application: 01.11.2023
(73) Proprietor: Hunan Sinoboom Intelligent Equipment Co., Ltd., Changsha, Hunan 410600 (CN)
(72) Inventor: LIU, Guoliang, Hunan, 410600 (CN); ZHOU, Zewen, Hunan, 410600 (CN); SONG, Tianrui, Hunan, 410600 (CN)
(74) Representative: Alpspitz IP

(56) References cited:
- EP-A1- 3 112 312
- EP-A1- 3 553 015
- CN-A- 112 723 264
- CN-A- 114 212 745
- CN-U- 213 735 614
- US-A1- 2019 144 246

## Description

### FIELD OF THE INVENTION

The present invention belongs to the field of mechanical control, in particular to an anti-collision detection and control method and system, a forklift system, and a forklift.

### BACKGROUND OF THE INVENTION

A forklift having rotary telescopic boom needs to work in a workshop or on a narrow site such as an old residential area, thus its rotation space or operation height space in an operation area or a extension distance of a boom is restricted. Therefore, when a rotary table is rotated, a counterweight at the tail of the rotary table often collides with other object, or the boom collides with the inner top of a building when lifting or with a foreign body when driving. As a result, the forklift has low operation efficiency and is troublesome to operate, and the operation accuracy of the forklift is affected.

CN 213 735 614 U discloses a deicing vehicle with auxiliary collision prevention system, comprising a ranging information obtaining unit, configured to obtain a rotary table ranging value, a chassis ranging value between a chassis and the obstacle, and a boom ranging value between a boom and the obstacle; and a control strategy executing unit, configured to select an operation control strategy for a vehicle body according to an operation state of the vehicle forklift body.

CN 114 212 745 A discloses a high-altitude work platform, control method, and storage medium.

### SUMMARY OF THE INVENTION

The present invention aims to solve at least one of the technical problems in the prior art. Thus, the present invention provides an anti-collision detection and control method for a forklift, which solves the problem that the dynamic anti-collision and protection cannot be achieved when a forklift is in operation. The present invention further provides an anti-collision detection and control system, an anti-collision detection and control system for a forklift, and a forklift.

An anti-collision detection and control method for a forklift according to an embodiment in a first aspect of the present invention is as described in claim 1.

The anti-collision detection and control method for a forklift according to the embodiment of the present invention has at least the following technical effects: the rotational speed of the rotary table can be adjusted by means of the first parallel control strategy according to the measured rotary table ranging value, the first preset distance value and the second preset distance value, so as to realize the function of adjusting the rotational speed of the rotary table according to the measured relative distance between the rotary table and the obstacle in the rotating process. The driving speed of the forklift body can be adjusted by means of the second parallel control strategy according to the measured chassis ranging value, the third preset distance value, and the fourth preset distance value; and the relative distance between the chassis and the obstacle is measured, and the chassis ranging value is compared with the two preset distance values, so as to ensure that the forklift body does not undergo collision in the driving process. The lifting angular speed, extension speed and rotational speed of the boom can be adjusted by means of the third parallel control strategy according to the boom ranging value, the fifth preset distance value, and the sixth preset distance value, where the boom ranging value can be compared with the two preset distance values to achieve adjustments of working states such as lifting, extension and rotation by. By executing the operation control strategy for the forklift body, omni-directional dynamic anti-collision of the forklift body during dynamic operation in different operation states is realized, efficient detection and protection are achieved, and operation efficiency of the forklift is effectively improved. In addition, hierarchical control is implemented by setting two preset values, which achieves the effect of pre-alarm, effectively improves the warning effect and improves the safety of the forklift during operation.

Some embodiments of the present invention is as described in claims 2-6.

An anti-collision detection and control system according to an embodiment in a second aspect of the present invention is as described in claim 7.

The anti-collision detection and control system, comprises a ranging information obtaining unit, configured to obtain a rotary table ranging value between a rotary table and an obstacle, a chassis ranging value between a chassis and the obstacle, and a boom ranging value between a boom and the obstacle; and a control strategy executing unit, configured to select an operation control strategy for a forklift body according to an operation state of the forklift body, wherein the operation state comprises rotation of the rotary table, driving of the forklift body and working of the boom, and the operation control strategy comprises a first parallel control strategy, a second parallel control strategy and a third parallel control strategy, wherein the first parallel control strategy comprises the following step: adjusting the rotational speed of the rotary table according to the rotary table ranging value, a first preset distance value and a second preset distance value; the second parallel control strategy comprises the following step: adjusting the driving speed of the forklift body according to the chassis ranging value, a third preset distance value and a fourth preset distance value; and the third parallel control strategy comprises the following step: adjusting the lifting angular speed, extension speed and rotational speed of the boom according to the boom ranging value, a fifth preset distance value and a sixth preset distance value.

The anti-collision detection and control system according to the embodiment of the present invention has at least the following technical effects: the rotational speed of the rotary table can be adjusted by means of the first parallel control strategy according to the measured rotary table ranging value, the first preset distance value, and the second preset distance value, so as to realize the function of adjusting the rotational speed of the rotary table according to the measured relative distance between the rotary table and the obstacle in the rotating process. The driving speed of the forklift body can be adjusted by means of the second parallel control strategy according to the measured chassis ranging value, the third preset distance value, and the fourth preset distance value; and the relative distance between the chassis and the obstacle is measured, and the chassis ranging value is compared with the two preset distance values, so as to ensured that the forklift body does not undergo collision in the driving process. The lifting angular speed, extending speed and rotating speed of the boom can be adjusted by means of the third parallel control strategy according to the boom ranging value, the fifth preset distance value, and the sixth preset distance value, where the boom ranging value can be compared with the two preset distance values to achieve adjustments of working states such as lifting, extending and rotating. By executing the operation control strategy for the forklift body, omni-directional dynamic anti-collision of the forklift body during dynamic operation in different operation states is realized, efficient detection and protection are achieved, and operation efficiency of the forklift is effectively improved. In addition, hierarchical control is implemented by setting two preset values, which achieves the effect of pre-alarm, effectively improves the warning effect and improves the safety of the forklift during operation.

Further, the anti-collision detection and control system for a forklift, comprises: a first ranging unit arranged at a rotary table of a forklift body, the first ranging unit being configured to obtain a rotary table ranging value between the rotary table and an obstacle; a second ranging unit arranged at a chassis of the forklift body, the second ranging unit being configured to obtain a chassis ranging value between the chassis and the obstacle; a third ranging unit arranged at a boom of the forklift body, the third ranging unit being configured to obtain a boom ranging value between the boom and the obstacle; and a main control unit electrically connected with a plurality of the ranging units, the main control unit being configured to select an operation control strategy for the forklift body according to an operation state of the forklift body, wherein the operation state comprises rotation of the rotary table, driving of the forklift body and working of the boom, and the operation control strategy comprises a first parallel control strategy, a second parallel control strategy and a third parallel control strategy, wherein the first parallel control strategy comprises the following step: adjusting the rotational speed of the rotary table according to the rotary table ranging value, a first preset distance value and a second preset distance value; the second parallel control strategy comprises the following step: adjusting the driving speed of the forklift body according to the chassis ranging value, a third preset distance value and a fourth preset distance value; and the third parallel control strategy comprises the following step: adjusting the lifting angular speed, extension speed and rotational speed of the boom according to the boom ranging value, a fifth preset distance value and a sixth preset distance value.

The anti-collision detection and control system for a forklift according to the embodiment of the present invention has at least the following technical effects: the rotational speed of the rotary table can be adjusted by means of the first parallel control strategy according to the measured rotary table ranging value, the first preset distance value, and the second preset distance value, so as to realize the function of adjusting the rotational speed of the rotary table according to the measured relative distance between the rotary table and the obstacle in the rotating process. The driving speed of the forklift body can be adjusted by means of the second parallel control strategy according to the measured chassis ranging value, the third preset distance value, and the fourth preset distance value; and the relative distance between the chassis and the obstacle is measured, and the chassis ranging value is compared with the two preset distance values, so as to ensure that the forklift body does not undergo collision in the driving process. The lifting angular speed, extension speed and rotational speed of the boom can be adjusted by means of the third parallel control strategy according to the boom ranging value, the fifth preset distance value, and the sixth preset distance value, where the boom ranging value can be compared with the two preset distance values to achieve adjustments of working states such as lifting, extension and rotation. By executing the operation control strategy for the forklift body, omni-directional dynamic anti-collision of the forklift body during dynamic operation in different operation states is realized, efficient detection and protection are achieved, and operation efficiency of the forklift is effectively improved. In addition, hierarchical control is implemented by setting two preset values, which achieves the effect of pre-alarm, effectively improves the warning effect and improves the safety of the forklift during operation.

A forklift according to an embodiment in a fourth aspect of the present invention includes a forklift body and the anti-collision detection and control system for the forklift as described in the third aspect, and the anti-collision detection and control system is electrically connected with the forklift body.

The forklift according to the embodiment of the present invention has at least the following technical effects: the rotational speed of the rotary table can be adjusted by means of the first parallel control strategy according to the measured rotary table ranging value, the first preset distance value and the second preset distance value, so as to realize the function of adjusting the rotational speed of the rotary table according to the measured relative distance between the rotary table and the obstacle in the rotating process. The driving speed of the forklift body can be adjusted by means of the second parallel control strategy according to the measured chassis ranging value, the third preset distance value and the fourth preset distance value; and the relative distance between the chassis and the obstacle is measured, and the chassis ranging value is compared with the two preset distance values, so as to ensure that the forklift body does not undergo collision in the driving process. The lifting angular speed, extension speed and rotational speed of the boom can be adjusted by means of the third parallel control strategy according to the boom ranging value, the fifth preset distance value and the sixth preset distance value, where the boom ranging value can be compared with the two preset distance values to achieve adjustments of working states such as lifting, extension and rotation. By executing the operation control strategy for the forklift body, omni-directional dynamic anti-collision of the forklift body during dynamic operation in different operation states is realized, efficient detection and protection are achieved, and operation efficiency of the forklift is effectively improved. In addition, hierarchical control is implemented by setting two preset values, which achieves the effect of pre-alarm, effectively improves the warning effect and improves the safety of the forklift during operation.

Some of the additional aspects and advantages of the present invention will be provided in the following description, and some will become apparent from the following description, or be learned by practice of the present invention.

### BRIEF DESCRIPTION OF THE DRAWINGS

The above and additional aspects and advantages of the present disclosure will become apparent and readily appreciated from the descriptions of embodiments with reference to accompanying drawings below.
FIG. 1 is a flowchart of an anti-collision detection and control method according to an embodiment of the present invention;
FIG. 2 is a block diagram of an anti-collision detection and control system according to an embodiment of the present invention;
FIG. 3 is a block diagram of an anti-collision detection and control system for a forklift according to an embodiment of the present invention;
FIG. 4 is a structural front view of a forklift body according to an embodiment of the present invention; and
FIG. 5 is a structural side view of a forklift body according to an embodiment of the present invention.

### Reference numerals:

Rotary table 100,
Chassis 200,
Boom 300.

### DETAILED DESCRIPTION OF THE EMBODIMENTS

Embodiments of the present invention will be described in detail below. Examples of the embodiments are shown in the accompanying drawings. The same or similar reference signs throughout the drawings denote the same or similar elements or elements having the same or similar functions. The embodiments described below by reference to the accompanying drawings are exemplary, are intended for explanation only, and are not to be construed as limiting the present invention.

In the description of the present invention, it should be understood that references to orientation descriptions, such as up, down, front, back, left, right, etc. indicated orientations, are intended only for ease of description of the present invention and for simplification of description, and are not intended to indicate or imply that the device or element indicated must have a particular orientation, be constructed and operate in a particular orientation, and therefore cannot be construed as limiting to the present invention.

In the description of the present invention, "some" means one or more, and "multiple" means two or more; "greater than", "smaller than", "more than", etc. are understood as not including the current number; and "above", "below", "within", etc. are understood as including the current number. "First" and "second" described are only for describing the technical features, and cannot be understood as indicating or implying the relative importance or implicitly indicating the quantity of the indicated technical features or implicitly indicating the sequence of the indicated technical features.

In the description of the present invention, unless otherwise specified, the terms such as "provided", "mounted" and "connected" should be understood in a broad sense, and the specific meanings of the terms in the present invention can be reasonably determined by those skilled in the art in light of the specific contents of the technical solutions.

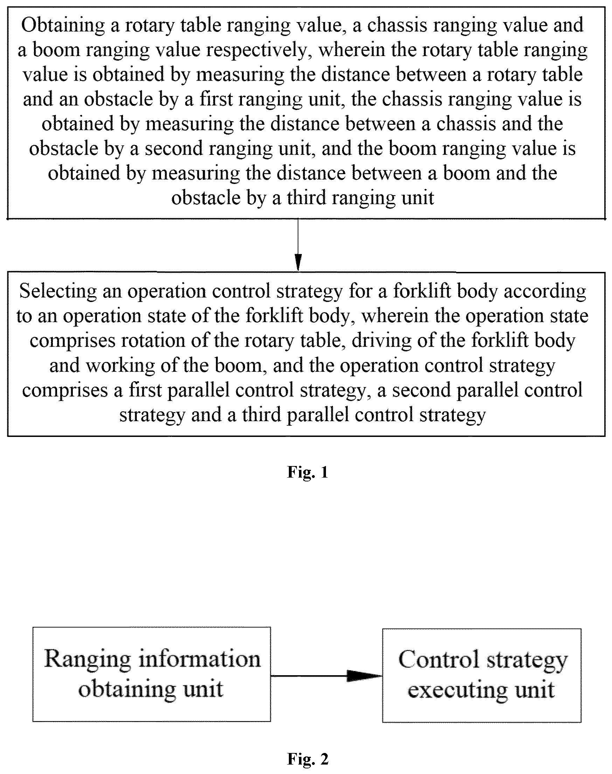

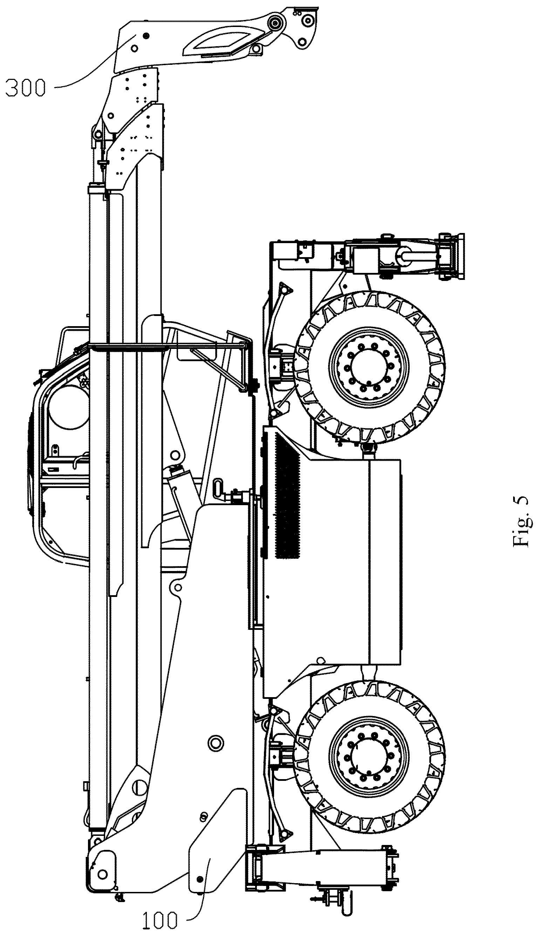

An anti-collision detection and control method according to an embodiment in a first aspect of the present invention is described below with reference to FIG. 1 to FIG. 5.

The anti-collision detection and control method according to the embodiment of the present invention includes the following steps:
A rotary table ranging value, a chassis ranging value and a boom ranging value are obtained respectively. The rotary table ranging value is obtained by measuring the distance between a rotary table 100 and an obstacle by a first ranging unit; the chassis ranging value is obtained by measuring the distance between a chassis 200 and the obstacle by a second ranging unit; and the boom ranging value is obtained by measuring the distance between a boom 300 and the obstacle by a third ranging unit.

An operation control strategy for a forklift body is selected according to an operation state of the forklift body. The operation state includes rotation of the rotary table, driving of the forklift body and working of the boom. The operation control strategy includes a first parallel control strategy, a second parallel control strategy and a third parallel control strategy.

The first parallel control strategy includes the following step: the rotational speed of the rotary table 100 is adjusted according to the rotary table ranging value, a first preset distance value and a second preset distance value.

The second parallel control strategy includes the following step: the driving speed of the forklift body is adjusted according to the chassis ranging value, a third preset distance value and a fourth preset distance value.

The third parallel control strategy includes the following step: the lifting angular speed, extension speed and rotational speed of the boom 300 is adjusted according to the boom ranging value, a fifth preset distance value and a sixth preset distance value.

With reference to FIG. 1 to FIG. 5, a first ranging unit is mounted at a tail end of a counterweight of the rotary table 100 of the forklift body. When the rotary table of the forklift body is in a rotation state, the first parallel control strategy in the operation control strategy is executed, at which time the first ranging unit starts measuring the distance between the rotary table 100 and the obstacle. The rotary table ranging value measured by the first ranging unit is obtained and compared with the first preset distance value and the second preset distance value, and the rotational speed of the rotary table is adjusted according to the comparison result. The second ranging unit is mounted at the front and rear of the chassis 200 of the forklift body. When the forklift body is in a driving state, the second parallel control strategy in the operation control strategy is executed, at which time the second ranging unit starts measuring the distance between the chassis 200 and the obstacle. The chassis ranging value measured by the second ranging unit is obtained and compared with the third preset distance value and the fourth preset distance value, and the driving speed of the forklift body which moves forward or backward is adjusted according to the comparison result. The third ranging unit is mounted on the head of the boom 300. When the boom is in a working state, the third parallel control strategy in the operation control strategy is executed, at which time the third ranging unit starts measuring the distance between the boom 300 and the obstacle. The boom ranging value measured by the third ranging unit is obtained and compared with the fifth preset distance value and the sixth preset distance value, and the lifting angular speed, extension speed and rotational speed of the boom 300 are adjusted according to the comparison result. Through the three parallel control strategies, anti-collision detection and protection of the whole forklift in different working states are completed, and omni-directional anti-collision of dynamic operation is realized. The safety of the forklift itself, a forklift operation site and operators is effectively protected, and work efficiency is ensured.

According to the anti-collision detection and control method of the embodiment of the present invention, the rotational speed of the rotary table 100 can be adjusted by means of the first parallel control strategy according to the measured rotary table ranging value, the first preset distance value and the second preset distance value, so as to realize the function of adjusting the rotational speed of the rotary table 100 according to the measured relative distance between the rotary table 100 and the obstacle in the rotating process. The driving speed of the forklift body can be adjusted by means of the second parallel control strategy according to the measured chassis ranging value, the third preset distance value and the fourth preset distance value; and the relative distance between the chassis 200 and the obstacle is measured, and the chassis ranging value is compared with the two preset distance values, so as to ensure that the forklift body does not undergo collision in the driving process. The lifting angular speed, extension speed and rotational speed of the boom 300 can be adjusted by means of the third parallel control strategy according to the boom ranging value, the fifth preset distance value and the sixth preset distance value, where the boom ranging value can be compared with the two preset distance values to achieve adjustments of working states such as lifting, extension and rotation. By executing the operation control strategy for the forklift body, omni-directional dynamic anti-collision of the forklift body during dynamic operation in different operation states is realized, efficient detection and protection are achieved, and operation efficiency of the forklift is effectively improved. In addition, hierarchical control is implemented by setting two preset values, which achieves the effect of pre-alarm, effectively improves the warning effect and improves the safety of the forklift during operation.

In some embodiments of the present invention, the step that an operation control strategy for a forklift body is selected according to an operation state of the forklift body includes the following steps:
When the operation state is a rotation state of the rotary table, the first parallel control strategy is executed for the rotary table 100 according to the rotary table ranging value;
When the operation state is a driving state of the forklift body, the second parallel control strategy is executed for the forklift body according to the chassis ranging value; and
When the operation state is a working state of the boom, the third parallel control strategy is executed for the boom 300 according to the boom ranging value.

With reference to FIG. 1 to FIG. 3, the selection and execution of the operation control strategy are determined from the operation state of the forklift body. The rotation state of the rotary table corresponds to the first parallel control strategy, the driving state of the forklift body corresponds to the second parallel control strategy, and the working state of the boom corresponds to the third parallel control strategy. It should be noted that there is no strict sequence of execution of the three parallel control strategies, and the operation control strategy that three parallel control strategies are simultaneous executed may be selected .

In some embodiments of the present invention, the first parallel control strategy includes the following steps: the first parallel control strategy: if the rotary table ranging value is greater than the first preset distance value, the rotational speed of the rotary table is maintained; if the rotary table ranging value is smaller than the first preset distance value and greater than the second preset distance value, the rotational speed of the rotary table is reduced; and if the rotary table ranging value is smaller than the second preset distance value, rotation is stopped. With reference to FIG. 1, how the operation control strategy is executed is described in detail below. For the first parallel control strategy: the first preset distance value is numerically greater than the second preset distance value, and if the obtained rotary table ranging value is greater than the first preset distance value, it represents that the obstacle keeps a safe distance from the rotary table 100, so the rotational speed of the rotary table is maintained; if the rotary table ranging value is smaller than the first preset distance value and greater than the second preset distance value, it represents that the distance between the obstacle and the rotary table 100 is further shortened, so the rotational speed of the rotary table 100 shall be reduced to prevent the rotary table 100 with excessive fast rotational speed from colliding with the obstacle; and if the rotary table ranging value is smaller than the second preset distance value, it represents that the distance between the obstacle and the rotary table 100 has reached an early warning distance, so the rotation of the rotary table shall be stopped. The first parallel control strategy is applicable to both clockwise rotation and counterclockwise rotation of the rotary table 100.

In some embodiments of the present invention, the second parallel control strategy includes the following steps: the second parallel control strategy: if the chassis ranging value is greater than the third preset distance value, the driving speed of the forklift body is maintained; if the chassis ranging value is smaller than the third preset distance value and greater than the fourth preset distance value, the driving speed of the forklift body is reduced; and if the chassis ranging value is smaller than the fourth preset distance value, driving is stopped. With reference to FIG. 1, for the second parallel control strategy: the third preset distance value is numerically greater than the fourth preset distance value, and if the obtained chassis ranging value is greater than the third preset distance value, it represents that the obstacle keeps a safe distance from the chassis 200, so the driving speed of the forklift body is maintained; if the chassis ranging value is smaller than the third preset distance value and greater than the fourth preset distance value, it represents that the distance between the obstacle and the forklift body is further shortened, so the driving speed of the forklift body shall be reduced to prevent the forklift body with excessive fast driving speed from colliding with the obstacle; and if the chassis ranging value is smaller than the fourth preset distance value, it represents that the distance between the obstacle and the forklift body has reached an early warning distance, so the driving of the forklift body shall be stopped. The second parallel control strategy is applicable to both forward and backward movement states of the forklift body.

In some embodiments of the present invention, the third parallel control strategy includes the following steps: the third parallel control strategy: if the boom ranging value is greater than the fifth preset distance value, the lifting angular speed, extension speed and rotational speed of the boom 300 is maintained; if the boom ranging value is smaller than the fifth preset distance value and greater than the sixth preset distance value, the lifting angular speed, extension speed and rotational speed of the boom 300 is reduced; and if the boom ranging value is smaller than the sixth preset distance value, the lifting, extension and rotation of the boom 300 is stopped. With reference to FIG. 1, for the third parallel control strategy: the fifth preset distance value is numerically greater than the sixth preset distance value, and if the obtained boom ranging value is greater than the fifth preset distance value, it represents that the obstacle keeps a safe distance from the boom 300, so the lifting angular speed, extension speed and rotational speed of the boom 300 are maintained; if the boom ranging value is smaller than the fifth preset distance value and greater than the sixth preset distance value, it represents that the distance between the obstacle and the boom 300 is further shortened, so the lifting angular speed, extension speed and rotational speed of the boom 300 shall be reduced to avoid collision with the obstacle; and if the boom ranging value is smaller than the sixth preset distance value, it represents that the distance between the obstacle and the boom 300 has reached an early warning distance, so the lifting, extension and rotation of the boom 300 shall be stopped.

In some embodiments of the present invention, the anti-collision detection and control method further includes the following steps:
If the rotary table ranging value is smaller than the first preset distance value and greater than the second preset distance value, an alarm unit is controlled to execute a first alarm prompt; when the rotary table ranging value is smaller than the second preset distance value, the alarm unit is controlled to execute a second alarm prompt;
If the chassis ranging value is smaller than the third preset distance value and greater than the fourth preset distance value, the alarm unit is controlled to execute a third alarm prompt; when the chassis ranging value is smaller than the fourth preset distance value, the alarm unit is controlled to execute a fourth alarm prompt; and
If the boom ranging value is smaller than the fifth preset distance value and greater than the sixth preset distance value, the alarm unit is controlled to execute a fifth alarm prompt; when the boom ranging value is smaller than the sixth preset distance value, the alarm unit is controlled to execute a sixth alarm prompt.

If the rotary table ranging value is smaller than the first preset distance value and greater than the second preset distance value, that is, the distance between the rotary table and the obstacle is further shortened, the alarm unit executes the first alarm prompt, the first alarm prompt being used for reminding to reduce the rotational speed of the rotary table; or if the rotary table ranging value is smaller than the second preset distance value, the alarm unit executes the second alarm prompt, the second alarm prompt being used for reminding to stop the rotation of the rotary table immediately to prevent collision with the obstacle. If the chassis ranging value is smaller than the third preset distance value and greater than the fourth preset distance value, the alarm unit executes the third alarm prompt, the third alarm prompt being used for reminding to reduce the driving speed of the forklift body; or if the chassis ranging value is smaller than the fourth preset distance value, the alarm unit executes the fourth alarm prompt, the fourth alarm prompt being used for reminding to stop driving the forklift body immediately to prevent collision with the obstacle. If the boom ranging value is smaller than the fifth preset distance value and greater than the sixth preset distance value, the alarm unit executes the fifth alarm prompt, the fifth alarm prompt being used for reminding to reduce the lifting angular speed, extension speed and rotational speed of the boom 300; or if the boom ranging value is smaller than the sixth preset distance value, the alarm unit executes the sixth alarm prompt, the sixth alarm prompt being used for reminding to stop the lifting, extension and rotation of the boom 300 immediately to prevent collision with the obstacle. In addition, if the forklift does not work but a driver or other moving obstacle approaches, an alarm prompt is also sent out, thereby improving the active safety of the forklift having rotary telescopic boom and protecting the safety of personnel and property safely and efficiently.

An anti-collision detection and control system according to a second aspect of an embodiment of the present invention includes:
A ranging information obtaining unit, configured to obtain a rotary table ranging value between a rotary table 100 and an obstacle, a chassis ranging value between a chassis 200 and the obstacle, and a boom ranging value between a boom 300 and the obstacle; and
A control strategy executing unit, configured to select an operation control strategy for a forklift body according to an operation state of the forklift body, where the operation state includes rotation of the rotary table, driving of the forklift body and working of the boom, and the operation control strategy includes a first parallel control strategy, a second parallel control strategy and a third parallel control strategy.

The first parallel control strategy includes the following step: the rotational speed of the rotary table 100 is adjusted according to the rotary table ranging value, a first preset distance value and a second preset distance value.

The second parallel control strategy includes the following step: the driving speed of the forklift body is adjusted according to the chassis ranging value, a third preset distance value and a fourth preset distance value.

The third parallel control strategy includes the following step: the lifting angular speed, extension speed and rotational speed of the boom 300 is adjusted according to the boom ranging value, a fifth preset distance value and a sixth preset distance value.

With reference to FIG. 2, the ranging values obtained by the ranging information obtaining unit are the basis for the control strategy executing unit to select which strategy to execute. Specifically, the methods for obtaining the ranging values and the selection and execution of the operation control strategy are described in detail above, so details are not described herein again.

According to the anti-collision detection and control system of the embodiment of the present invention, by executing the first parallel control strategy, the rotational speed of the rotary table 100 is adjusted according to the rotary table ranging value, the first preset distance value and the second preset distance value, so as to realize the function of adjusting the rotational speed of the rotary table 100 according to the measured relative distance between the rotary table 100 and the obstacle in the rotating process. By executing the second parallel control strategy, the driving speed of the forklift body is adjusted according to the chassis ranging value, the third preset distance value and the fourth preset distance value; and the relative distance between the chassis 200 and the obstacle is measured, and the chassis ranging value is compared with the two preset distance values, so as to ensure that the forklift body does not undergo collision in the driving process. By executing the third parallel control strategy, the lifting angular speed, extension speed and rotational speed of the boom 300 is adjusted according to the boom ranging value, the fifth preset distance value, and the sixth preset distance value, where the boom ranging value can be compared with the two preset distance values to achieve adjustments of working states such as lifting, extension and rotation. By executing the operation control strategy for the forklift body, omni-directional dynamic anti-collision of the forklift body during dynamic operation in different operation states is realized, efficient detection and protection are achieved, and operation efficiency of the forklift is effectively improved. In addition, hierarchical control is implemented by setting two preset values, which achieves the effect of pre-alarm, effectively improves the warning effect and improves the safety of the forklift during operation.

An anti-collision detection and control system for a forklift according to a third aspect of an embodiment of the present invention includes:
A first ranging unit arranged at a rotary table 100 of a forklift body, the first ranging unit being configured to obtain a rotary table ranging value between the rotary table 100 and an obstacle;
A second ranging unit arranged at a chassis 200 of the forklift body, the second ranging unit being configured to obtain a chassis ranging value between the chassis 200 and the obstacle;
A third ranging unit arranged at a boom 300 of the forklift body, the third ranging unit being configured to obtain a boom ranging value between the boom 300 and the obstacle; and
A main control unit electrically connected with a plurality of the ranging units, the main control unit being configured to select an operation control strategy for the forklift body according to an operation state of the forklift body, where the operation state includes rotation of the rotary table, driving of the forklift body and working of the boom, and the operation control strategy includes a first parallel control strategy, a second parallel control strategy and a third parallel control strategy.

The first parallel control strategy includes the following step: the rotational speed of the rotary table 100 is adjusted according to the rotary table ranging value, a first preset distance value and a second preset distance value.

The second parallel control strategy includes the following step: the driving speed of the forklift body is adjusted according to the chassis ranging value, a third preset distance value and a fourth preset distance value.

The third parallel control strategy includes the following step: the lifting angular speed, extension speed and rotational speed of the boom 300 is adjusted according to the boom ranging value, a fifth preset distance value and a sixth preset distance value.

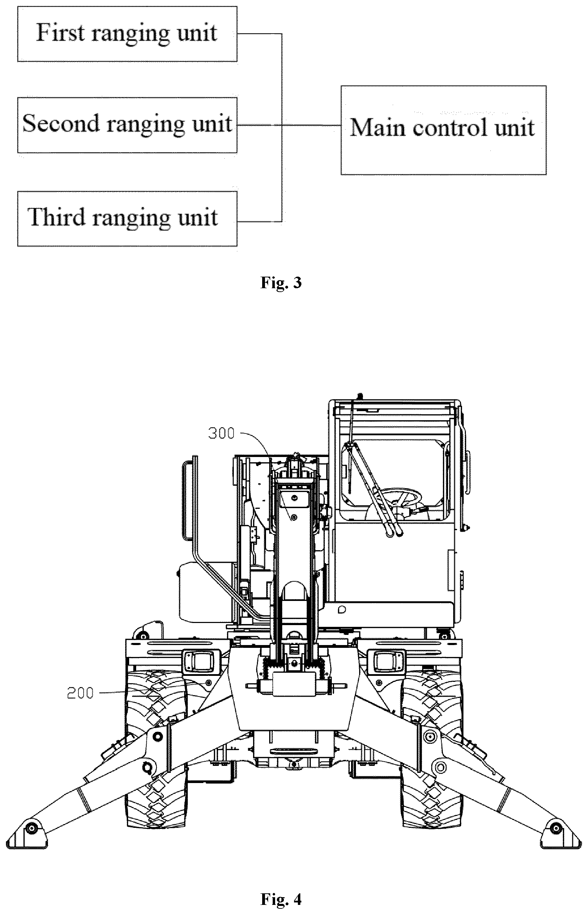

With reference to FIG. 3 to FIG. 5, the first ranging unit includes a plurality of ultrasonic sensors arranged on a side of a tail of the rotary table 100 close to an engine, on a side of the tail of the rotary table 100 close to a cab and on a middle side of the tail of the rotary table 100 respectively. The second ranging unit also includes a plurality of ultrasonic sensors arranged on a side of a tail of the chassis 200 close to the engine, on a side of the tail of the chassis 200 close to the cab respectively. The third ranging unit also includes a plurality of ultrasonic sensors arranged on a side of a head of the boom 300 close to the engine, on a side of the head of the boom 300 close to the cab, on a front part of the boom 300 and on a top part of the boom 300 respectively. The methods for obtaining the ranging values and the selection and execution of the operation control strategy are described in detail above, so details are not described herein again.

According to the anti-collision detection and control system for a forklift of the embodiment of the present invention, the rotational speed of the rotary table 100 can be adjusted by means of the first parallel control strategy according to the measured rotary table ranging value, the first preset distance value and the second preset distance value, so as to realize the function of adjusting the rotational speed of the rotary table 100 according to the measured relative distance between the rotary table 100 and the obstacle in the rotating process. The driving speed of the forklift body can be adjusted by means of the second parallel control strategy according to the measured chassis ranging value, the third preset distance value and the fourth preset distance value; and the relative distance between the chassis 200 and the obstacle is measured, and the chassis ranging value is compared with the two preset distance values, so as to ensure that the forklift body does not undergo collision in the driving process. The lifting angular speed, extension speed and rotational speed of the boom 300 can be adjusted by means of the third parallel control strategy according to the boom ranging value, the fifth preset distance value and the sixth preset distance value, where the boom ranging value can be compared with the two preset distance values to achieve adjustments of working states such as lifting, extension and rotation. By executing the operation control strategy for the forklift body, omni-directional dynamic anti-collision of the forklift body during dynamic operation in different operation states is realized, efficient detection and protection are achieved, and operation efficiency of the forklift is effectively improved. In addition, hierarchical control is implemented by setting two preset values, which achieves the effect of pre-alarm, effectively improves the warning effect and improves the safety of the forklift during operation.

In some embodiments of the present invention, the above-mentioned anti-collision detection and control system for a forklift further includes an alarm unit electrically connected with the main control unit. The alarm unit is configured to send out an alarm prompt. This embodiment does not limit the alarm unit. The alarm unit may be a buzzer, a voice broadcast alarm, or the like.

In some embodiments of the present invention, the first ranging unit, the second ranging unit, and the third ranging unit are ultrasonic sensors. The ultrasonic sensors adopted in this embodiment have mature technology, high reliability and low cost. However, this embodiment is not limited to this. Specifically, the ultrasonic sensors may also be replaced by laser radars or TOF three-dimensional structured light sensors.

A forklift according to a fourth aspect of an embodiment of the present invention includes a forklift body and the anti-collision detection and control system for a forklift as described in the third aspect, and the anti-collision detection and control system is electrically connected with the forklift body.

According to the forklift of the embodiment of the present invention, the rotational speed of the rotary table 100 can be adjusted by means of the first parallel control strategy according to the measured rotary table ranging value, the first preset distance value and the second preset distance value, so as to realize the function of adjusting the rotational speed of the rotary table 100 according to the measured relative distance between the rotary table 100 and the obstacle in the rotating process. The driving speed of the forklift body can be adjusted by means of the second parallel control strategy according to the measured chassis ranging value, the third preset distance value and the fourth preset distance value; and the relative distance between the chassis 200 and the obstacle is measured, and the chassis ranging value is compared with the two preset distance values, so as to ensure that the forklift body does not undergo collision in the driving process. The lifting angular speed, extension speed and rotational speed of the boom can be adjusted by means of the third parallel control strategy according to the boom ranging value, the fifth preset distance value and the sixth preset distance value, where the boom ranging value can be compared with the two preset distance values to achieve adjustments of working states such as lifting, extension and rotation. By executing the operation control strategy for the forklift body, omni-directional dynamic anti-collision of the forklift body during dynamic operation in different operation states is realized, efficient detection and protection are achieved, and operation efficiency of the forklift is effectively improved. In addition, hierarchical control is implemented by setting two preset values, which achieves the effect of pre-alarm, effectively improves the warning effect and improves the safety of the forklift during operation.

Reference throughout this specification to "an embodiment", "some embodiments", "an exemplary embodiment", "an example", "a specific example", or "some examples" means that a particular feature, structure, material, or characteristic described in connection with the embodiment or example is included in at least one embodiment or example of the present invention. Thus, the above terms throughout this specification do not necessarily refer to the same embodiment or example. Moreover, the described specific features, structures, materials or characteristics can be combined in any one or more embodiments or examples in a suitable manner.
Although the embodiments of the present invention are described in detail above with reference to the accompanying drawings, the present invention is not limited to the above-mentioned embodiments. It could be understood by those of ordinary skill in the art that various changes, modifications, substitutions and variations may be made to these embodiments without departing from the scope of the present invention as defined by the claims.

## Claims

1. An anti-collision detection and control method, comprising the following steps:
obtaining a rotary table ranging value, a chassis ranging value and a boom ranging value respectively, wherein the rotary table ranging value is obtained by measuring the distance between a rotary table (100) and an obstacle by a first ranging unit, the chassis ranging value is obtained by measuring the distance between a chassis (200) and the obstacle by a second ranging unit, and the boom ranging value is obtained by measuring the distance between a boom (300) and the obstacle by a third ranging unit; and
selecting an operation control strategy for a forklift body according to an operation state of the forklift body, wherein the operation state comprises rotation of the rotary table (100), driving of the forklift body and working of the boom (300), and the operation control strategy comprises a first parallel control strategy, a second parallel control strategy and a third parallel control strategy, wherein
the first parallel control strategy comprises the following step: adjusting the rotational speed of the rotary table (100) according to the rotary table ranging value, a first preset distance value and a second preset distance value;
the second parallel control strategy comprises the following step: adjusting the driving speed of the forklift body according to the chassis ranging value, a third preset distance value and a fourth preset distance value; and
the third parallel control strategy comprises the following step: adjusting the lifting angular speed, extension speed and rotational speed of the boom (300) according to the boom (300) ranging value, a fifth preset distance value and a sixth preset distance value.

2. The anti-collision detection and control method according to claim 1, wherein the selecting an operation control strategy for a forklift body according to an operation state of the forklift body comprises the following steps:
when the operation state is a rotation state of the rotary table (100), executing the first parallel control strategy for the rotary table (100) according to the rotary table ranging value;
when the operation state is a driving state of the forklift body, executing the second parallel control strategy for the forklift body according to the chassis ranging value; and
when the operation state is a working state of the boom (300), executing the third parallel control strategy for the boom (300) according to the boom ranging value.

3. The anti-collision detection and control method according to claim 1 or 2, wherein the first parallel control strategy comprises the following steps:
the first parallel control strategy: if the rotary table ranging value is greater than the first preset distance value, maintaining the rotational speed of the rotary table (100); if the rotary table ranging value is smaller than the first preset distance value and greater than the second preset distance value, reducing the rotational speed of the rotary table (100); and if the rotary table ranging value is smaller than the second preset distance value, stopping rotation.

4. The anti-collision detection and control method according to any one of the preceding claims, wherein the second parallel control strategy comprises the following steps:
the second parallel control strategy: if the chassis ranging value is greater than the third preset distance value, maintaining the driving speed of the forklift body; if the chassis ranging value is smaller than the third preset distance value and greater than the fourth preset distance value, reducing the driving speed of the forklift body; and if the chassis ranging value is smaller than the fourth preset distance value, stopping driving.

5. The anti-collision detection and control method according to any one of the preceding claims, wherein the third parallel control strategy comprises the following steps:
the third parallel control strategy: if the boom ranging value is greater than the fifth preset distance value, maintaining the lifting angular speed, extension speed and rotational speed of the boom (300); if the boom ranging value is smaller than the fifth preset distance value and greater than the sixth preset distance value, reducing the lifting angular speed, extension speed and rotational speed of the boom; and if the boom ranging value is smaller than the sixth preset distance value, stopping lifting, extension and rotation of the boom (300).

6. The anti-collision detection and control method according to any one of the preceding claims, further comprising the following steps:
if the rotary table ranging value is smaller than the first preset distance value and greater than the second preset distance value, controlling an alarm unit to execute a first alarm prompt; if the rotary table ranging value is smaller than the second preset distance value, controlling the alarm unit to execute a second alarm prompt;
if the chassis ranging value is smaller than the third preset distance value and greater than the fourth preset distance value, controlling the alarm unit to execute a third alarm prompt; if the chassis ranging value is smaller than the fourth preset distance value, controlling the alarm unit to execute a fourth alarm prompt; and
if the boom ranging value is smaller than the fifth preset distance value and greater than the sixth preset distance value, controlling the alarm unit to execute a fifth alarm prompt; if the boom ranging value is smaller than the sixth preset distance value, the alarm unit is controlled to execute a sixth alarm prompt.

7. An anti-collision detection and control system, comprising:
a ranging information obtaining unit, configured to obtain a rotary table ranging value between a rotary table (100) and an obstacle, a chassis ranging value between a chassis (200) and the obstacle, and a boom ranging value between a boom (300) and the obstacle; and
a control strategy executing unit, configured to select an operation control strategy for a forklift body according to an operation state of the forklift body, wherein the operation state comprises rotation of the rotary table (100), driving of the forklift body and working of the boom (300), and the operation control strategy comprises a first parallel control strategy, a second parallel control strategy and a third parallel control strategy, wherein
the first parallel control strategy comprises the following step: adjusting the rotational speed of the rotary table according to the rotary table ranging value, a first preset distance value and a second preset distance value;
the second parallel control strategy comprises the following step: adjusting the driving speed of the forklift body according to the chassis ranging value, a third preset distance value and a fourth preset distance value; and
the third parallel control strategy comprises the following step: adjusting the lifting angular speed, extension speed and rotational speed of the boom according to the boom ranging value, a fifth preset distance value and a sixth preset distance value,
wherein the ranging information obtaining unit comprises a first ranging unit arranged at a rotary table (100) of a forklift body, the first ranging unit being configured to obtain a rotary table ranging value between the rotary table (100) and an obstacle; a second ranging unit arranged at a chassis of the forklift body, the second ranging unit being configured to obtain a chassis ranging value between the chassis (200) and the obstacle; and a third ranging unit arranged at a boom (300) of the forklift body, the third ranging unit being configured to obtain a boom ranging value between the boom (300) and the obstacle.

8. A forklift, comprising a forklift body and the anti-collision detection and control system for a forklift according to claim 7, and the anti-collision detection and control system is electrically connected with the forklift body.

9. A computer-readable storage medium, wherein the computer-readable storage medium stores computer-executable instructions for causing the anti-collision detection and control system of claim 7 to execute the anti-collision detection and control method according to any one of claims 1 to 6.

## Patentansprüche

1. Antikollisionserkennung- und steuerungsverfahren, enthaltend die folgenden Schritte:
Erlangen eines Drehtisch-Abstandswerts, eines Chassis-Abstandswerts und eines Ausleger-Abstandswerts, wobei der Drehtisch-Abstandswert durch Messen des Abstands zwischen einem Drehtisch (100) und einem Hindernis mittels einer ersten Abstandsmesseinheit ermittelt wird, der Chassis-Abstandswert durch Messen des Abstands zwischen einem Chassis (200) und dem Hindernis mittels einer zweiten Abstandsmesseinheit ermittelt wird und der Ausleger-Abstandswert durch Messen des Abstands zwischen einem Ausleger (300) und dem Hindernis mittels einer dritten Abstandsmesseinheit ermittelt wird; und
Auswählen einer Betriebssteuerungsstrategie für einen Gabelstaplerkörper gemäß einem Betriebszustand des Gabelstaplerkörpers, wobei der Betriebszustand die Drehung des Drehtischs (100), das Fahren des Gabelstaplerkörpers und das Arbeiten des Auslegers (300) enthält, und die Betriebssteuerungsstrategie eine erste Parallelsteuerungsstrategie, eine zweite Parallelsteuerungsstrategie und eine dritte Parallelsteuerungsstrategie enthält, wobei:
die erste Parallelsteuerungsstrategie folgenden Schritt aufweist: Einstellen der Drehgeschwindigkeit des Drehtischs (100) gemäß dem Drehtisch-Abstandswert, einem ersten voreingestellten Abstandswert und einem zweiten voreingestellten Abstandswert;
die zweite Parallelsteuerungsstrategie folgenden Schritt aufweist: Einstellen der Fahrgeschwindigkeit des Gabelstaplerkörpers gemäß dem Chassis-Abstandswert, einem dritten voreingestellten Abstandswert und einem vierten voreingestellten Abstandswert; und
die dritte Parallelsteuerungsstrategie folgenden Schritt aufweist: Einstellen der Hubwinkelgeschwindigkeit, der Ausfahrgeschwindigkeit und der Drehgeschwindigkeit des Auslegers (300) gemäß dem Ausleger-Abstandswert, einem fünften voreingestellten Abstandswert und einem sechsten voreingestellten Abstandswert.

2. Antikollisionserkennung- und steuerungsverfahren nach Anspruch 1, wobei das Auswählen einer Betriebssteuerungsstrategie für den Gabelstapelkörper gemäß einem Betriebszustand des Gabelstaplerkörpers folgende Schritte aufweist:
wenn der Betriebszustand ein Drehzustand des Drehtisches (100) ist, Ausführen der ersten Parallelsteuerungsstrategie für den Drehtisch (100) gemäß dem Drehtisch-Abstandswert;
wenn der Betriebszustand ein Fahrzustand des Gabelstaplerkörpers ist, Ausführen der zweiten Parallelsteuerungsstrategie für den Gabelstaplerkörper gemäß dem Chassis-Abstandswert; und
wenn der Betriebszustand ein Arbeitszustand des Auslegers (300) ist, Ausführen der dritten Parallelsteuerungsstrategie für den Ausleger (300) gemäß dem Ausleger-Abstandswert.

3. Antikollisionserkennung- und steuerungsverfahren nach Anspruch 1 oder 2, wobei die erste Parallelsteuerungsstrategie folgende Schritte aufweist:
die erste Parallelsteuerungsstrategie: wenn der Drehtisch-Abstandswert größer als der erste voreingestellte Abstandswert ist, Beibehalten der Drehgeschwindigkeit des Drehtisches (100); wenn der Drehtisch-Abstandswert kleiner als der erste voreingestellte Abstandswert und größer als der zweite voreingestellte Abstandswert ist, Reduzieren der Drehgeschwindigkeit des Drehtisches (100); und wenn der Drehtisch-Abstandswert kleiner als der zweite voreingestellte Abstandswert ist, Stoppen der Drehbewegung.

4. Antikollisionserkennung- und steuerungsverfahren nach einem der vorangegangenen Ansprüche, wobei die zweite Parallelsteuerungsstrategie folgende Schritte umfasst:
die zweite Parallelsteuerungsstrategie: wenn der Chassis-Abstandswert größer als der dritte voreingestellte Abstandswert ist, Beibehalten der Fahrgeschwindigkeit des Gabelstaplerkörpers; wenn der Chassis-Abstandswert kleiner als der dritte voreingestellte Abstandswert und größer als der vierte voreingestellte Abstandswert ist, Reduzieren der Fahrgeschwindigkeit des Gabelstaplerkörpers; und wenn der Chassis-Abstandswert kleiner als der vierte voreingestellte Abstandswert ist, Stoppen der Fahrt.

5. Antikollisionserkennung- und steuerungsverfahren nach einem der vorhergehenden Ansprüche, wobei die dritte Parallelsteuerungsstrategie folgende Schritte umfasst:
die dritte Parallelsteuerungsstrategie: wenn der Ausleger-Abstandswert größer als der fünfte voreingestellte Abstandswert ist, Beibehalten der Hubwinkelgeschwindigkeit, der Ausfahrgeschwindigkeit und der Drehgeschwindigkeit des Auslegers (300); wenn der Ausleger-Abstandswert kleiner als der fünfte voreingestellte Abstandswert und größer als der sechste voreingestellte Abstandswert ist, Reduzieren der Hubwinkelgeschwindigkeit, der Ausfahrgeschwindigkeit und der Drehgeschwindigkeit des Auslegers; und wenn der Ausleger-Abstandswert kleiner als der sechste voreingestellte Abstandswert ist, Stoppen des Hebens, Ausfahrens und Drehens des Auslegers (300).

6. Antikollisionserkennung- und steuerungsverfahren nach einem der vorangegangenen Ansprüche, ferner enthaltend folgende Schritte:
wenn der Drehtisch-Abstandswert kleiner als der erste voreingestellte Abstandswert und größer als der zweite voreingestellte Abstandswert ist, Ansteuern einer Alarmeinheit zur Ausgabe eines ersten Alarmhinweises; wenn der Drehtisch-Abstandswert kleiner als der zweite voreingestellte Abstandswert ist, Ansteuern der Alarmeinheit zur Ausgabe eines zweiten Alarmhinweises; wenn der Chassis-Abstandswert kleiner als der dritte voreingestellte Abstandswert und größer als der vierte voreingestellte Abstandswert ist, Ansteuern der Alarmeinheit zur Ausgabe eines dritten Alarmhinweises; wenn der Chassis-Abstandswert kleiner als der vierte voreingestellte Abstandswert ist, Ansteuern der Alarmeinheit zur Ausgabe eines vierten Alarmhinweises; und
wenn der Ausleger-Abstandswert kleiner als der fünfte voreingestellte Abstandswert und größer als der sechste voreingestellte Abstandswert ist, Ansteuern der Alarmeinheit zur Ausgabe eines fünften Alarmhinweises; wenn der Ausleger-Abstandswert kleiner als der sechste voreingestellte Abstandswert ist, Ansteuern der Alarmeinheit zur Ausgabe eines sechsten Alarmhinweises.

7. Antikollisionserkennungs- und -steuerungssystem, enthaltend:
eine Abstandsinformationserfassungseinheit, die konfiguriert ist zum Erfassen eines Drehtisch-Abstandswerts zwischen einem Drehtisch (100) und einem Hindernis, eines Chassis-Abstandswerts zwischen einem Chassis (200) und dem Hindernis sowie eines Ausleger-Abstandswerts zwischen einem Ausleger (300) und dem Hindernis; und
eine Steuerungsstrategie-Ausführungseinheit, die konfiguriert ist zum Auswählen einer Betriebssteuerungsstrategie für einen Gabelstaplerkörper gemäß einem Betriebszustand des Gabelstaplerkörpers, wobei der Betriebszustand die Drehung des Drehtisches (100), das Fahren des Gabelstaplerkörpers und das Arbeiten des Auslegers (300) enthält, und die Betriebssteuerungsstrategie eine erste, zweite und dritte Parallelsteuerungsstrategie enthält, wobei:
die erste Parallelsteuerungsstrategie die folgenden Schritte aufweist: Einstellen der Drehgeschwindigkeit des Gabelstaplerkörpers gemäß dem Drehtisch-Abstandswert, einem ersten voreingestellten Abstandswert und einem zweiten voreingestellten Abstandswert;
die zweite Parallelsteuerungsstrategie die folgenden Schritte aufweist: Einstellen der Fahrgeschwindigkeit des Gabelstaplerkörpers gemäß dem Chassis-Abstandswert, einem dritten voreingestellten Abstandswert und einem vierten voreingestellten Abstandswert; und
die dritte Parallelsteuerungsstrategie die folgenden Schritte aufweist: Einstellen der Hubwinkelgeschwindigkeit, der Ausfahrgeschwindigkeit und der Drehgeschwindigkeit des Auslegers gemäß dem Ausleger-Abstandswert, einem fünften voreingestellten Abstandswert und einem sechsten voreingestellten Abstandswert, wobei
die Abstandsinformationserfassungseinheit einen erste Abstandsmesseinheit enthält, die am Drehtisch (100) des Gabelstaplerkörpers angeordnet und konfiguriert ist zum Erfassen des Drehtisch-Abstandswerts zwischen dem Drehtisch (100) und einem Hindernis; eine zweite Abstandsmesseinheit, die am Chassis des Gabelstaplerkörpers angeordnet und konfiguriert ist zum Erfassen des Chassis-Abstandswerts zwischen dem Chassis (200) und dem Hindernis; und eine dritte Abstandsmesseinheit, die am Ausleger (300) des Gabelstaplerkörpers angeordnet und konfiguriert ist zum Erfassen des Ausleger-Abstandswerts zwischen dem Ausleger (300) und dem Hindernis.

8. Gabelstapler, der einen Gabelstaplerkörper und das Antikollisionserkennungs- und -steuerungssystem für einen Gabelstapler nach Anspruch 7 aufweist, wobei das Antikollisionserkennungs- und -steuerungssystem elektrisch mit dem Gabelstaplerkörper verbunden ist.

9. Computerlesbares Speichermedium, wobei das computerlesbare Speichermedium computerausführbare Anweisungen speichert, um das Antikollisionserkennungs- und -steuerungssystem nach Anspruch 7 zu veranlassen, das Antikollisionserkennungs- und -steuerungsverfahren nach einem der Ansprüche 1 bis 6 auszuführen.

## Revendications

1. Procédé de détection et de commande anticollision, comprenant les étapes suivantes :
l'obtention d'une valeur de télémétrie de table rotative, une valeur de télémétrie de châssis et une valeur de télémétrie de flèche respectivement, dans lequel la valeur de télémétrie de table rotative est obtenue par la mesure de la distance entre une table rotative (100) et un obstacle par une première unité de télémétrie, la valeur de télémétrie de châssis est obtenue en mesurant la distance entre un châssis (200) et l'obstacle par une deuxième unité de télémétrie et la valeur de télémétrie de flèche est obtenue en mesurant la distance entre une flèche (300) et l'obstacle par une troisième unité de télémétrie ; et
la sélection d'une stratégie de commande de fonctionnement pour un corps de chariot élévateur à fourche selon un état de fonctionnement du corps de chariot élévateur à fourche, dans lequel l'état de fonctionnement comprend la rotation de la table rotative (100), l'entraînement du corps de chariot élévateur à fourche et le travail de la flèche (300) et la stratégie de commande de fonctionnement comprend une première stratégie de commande parallèle, une deuxième stratégie de commande parallèle et une troisième stratégie de commande parallèle, dans lequel
la première stratégie de commande parallèle comprend l'étape suivante : l'ajustement de la vitesse de rotation de la table rotative (100) selon la valeur de télémétrie de table rotative, une première distance prédéfinie et une seconde valeur de distance prédéfinie ;
la deuxième stratégie de commande parallèle comprend l'étape suivante :
l'ajustement de la vitesse d'entraînement du corps de chariot élévateur à fourche selon la valeur de télémétrie de châssis, une troisième valeur de distance prédéfinie et une quatrième valeur de distance prédéfinie ; et
la troisième stratégie de commande parallèle comprend l'étape suivante :
l'ajustement de la vitesse angulaire de levage, de la vitesse d'extension et de la vitesse de rotation de la flèche (300) selon la valeur de télémétrie de flèche (300), une cinquième valeur de distance prédéfinie et une sixième valeur de distance prédéfinie.

2. Procédé de détection et de commande anticollision selon la revendication 1, dans lequel la sélection d'une stratégie de commande de fonctionnement pour un corps de chariot élévateur à fourche selon un état de fonctionnement du corps de chariot élévateur à fourche comprend les étapes suivantes :
lorsque l'état de fonctionnement est un état de rotation de la table rotative (100), l'exécution de la première stratégie de commande parallèle pour la table rotative (100) selon la valeur de télémétrie de table rotative ;
lorsque l'état de fonctionnement est un état d'entraînement du corps de chariot élévateur à fourche, l'exécution de la deuxième stratégie de commande parallèle pour le corps de chariot élévateur à fourche selon la valeur de télémétrie de châssis ; et
lorsque l'état de fonctionnement est un état de travail de la flèche (300), l'exécution de la troisième stratégie de commande parallèle pour la flèche (300) selon la valeur de télémétrie de flèche.

3. Procédé de détection et de commande anticollision selon la revendication 1 ou 2, dans lequel la première stratégie de commande parallèle comprend les étapes suivantes :
la première stratégie de commande parallèle : si la valeur de télémétrie de table rotative est supérieure à la première valeur de distance prédéfinie, le maintien de la vitesse de rotation de la table rotative (100) ; si la valeur de télémétrie de table rotative est inférieure à la première valeur de distance prédéfinie et supérieure à la seconde valeur de distance prédéfinie, la réduction de la vitesse de rotation de la table rotative (100) ; et si la valeur de télémétrie de table rotative est inférieure à la seconde valeur de distance prédéfinie, l'arrêt de la rotation.

4. Procédé de détection et de commande anticollision selon l'une quelconque des revendications précédentes, dans lequel la deuxième stratégie de commande parallèle comprend les étapes suivantes :
la deuxième stratégie de commande parallèle : si la valeur de télémétrie de châssis est supérieure à la troisième valeur de distance prédéfinie, le maintien de la vitesse d'entraînement du corps de chariot élévateur à fourche ; si la valeur de télémétrie de châssis est inférieure à la troisième valeur de distance prédéfinie et supérieure à la quatrième valeur de distance prédéfinie, la réduction de la vitesse d'entraînement du corps de chariot élévateur à fourche ; et si la valeur de télémétrie de châssis est inférieure à la quatrième valeur de distance prédéfinie, l'arrêt de l'entraînement.

5. Procédé de détection et de commande anticollision selon l'une quelconque des revendications précédentes, dans lequel la troisième stratégie de commande parallèle comprend les étapes suivantes :
la troisième stratégie de commande parallèle : si la valeur de télémétrie de flèche est supérieure à la cinquième valeur de distance prédéfinie, le maintien de la vitesse angulaire de levage, de la vitesse d'extension et de la vitesse de rotation de la flèche (300) ; si la valeur de télémétrie de flèche est inférieure à la cinquième valeur de distance prédéfinie et supérieure à la sixième valeur de distance prédéfinie, la réduction de la vitesse angulaire de levage, de la vitesse d'extension et de la vitesse de rotation de la flèche ; et si la valeur de télémétrie de flèche est inférieure à la sixième valeur de distance prédéfinie, l'arrêt du levage, de l'extension et de la rotation de la flèche (300).

6. Procédé de détection et de commande anticollision selon l'une quelconque des revendications précédentes, comprenant en outre les étapes suivantes :
si la valeur de télémétrie de table rotative est inférieure à la première valeur de distance prédéfinie et supérieure à la seconde valeur de distance prédéfinie, la commande d'une unité d'alerte pour exécuter une première signal d'alarme ; si la valeur de télémétrie de table rotative est inférieure à la seconde valeur de distance prédéfinie, la commande de l'unité d'alarme pour exécuter une deuxième signal d'alarme ;
si la valeur de télémétrie de châssis est inférieure à la troisième valeur de distance prédéfinie et supérieure à la quatrième valeur de distance prédéfinie, la commande de l'unité d'alarme pour exécuter une troisième signal d'alarme ; si la valeur de télémétrie de châssis est inférieure à la quatrième valeur de distance prédéfinie, la commande de l'unité d'alarme pour exécuter une quatrième signal d'alarme ; et
si la valeur de télémétrie de flèche est inférieure à la cinquième valeur de distance prédéfinie et supérieure à la sixième valeur de distance prédéfinie, la commande de l'unité d'alarme pour exécuter une cinquième signal d'alarme ; si la valeur de télémétrie de flèche est inférieure à la sixième valeur de distance prédéfinie, l'unité d'alarme est commandée pour exécuter une sixième signal d'alarme.

7. Système de détection et de commande anticollision, comprenant :
une unité d'obtention d'informations de télémétrie, configurée pour obtenir une valeur de télémétrie de table rotative entre une table rotative (100) et un obstacle, une valeur de télémétrie de châssis entre un châssis (200) et l'obstacle et une valeur de télémétrie de flèche entre une flèche (300) et l'obstacle ; et
une unité d'exécution de stratégie de commande, configurée pour sélectionner une stratégie de commande de fonctionnement pour un corps de chariot élévateur à fourche selon un état de fonctionnement du corps de chariot élévateur à fourche, dans lequel l'état de fonctionnement comprend la rotation de la table rotative (100), l'entraînement du corps de chariot élévateur à fourche et le travail de la flèche (300) et la stratégie de commande de fonctionnement comprend une première stratégie de commande parallèle, une deuxième stratégie de commande parallèle et une troisième stratégie de commande parallèle, dans lequel
la première stratégie de commande parallèle comprend l'étape suivante : l'ajustement de la vitesse de rotation de la table de rotative selon la valeur de télémétrie de table rotative, une première valeur de distance prédéfinie et une seconde valeur de distance prédéfinie ;
la deuxième stratégie de commande parallèle comprend l'étape suivante :
l'ajustement de la vitesse d'entraînement du corps de chariot élévateur à fourche selon la valeur de télémétrie de châssis, une troisième valeur de distance prédéfinie et une quatrième valeur de distance prédéfinie ; et
la troisième stratégie de commande parallèle comprend l'étape suivante :
l'ajustement de la vitesse angulaire de levage, de la vitesse d'extension et de la vitesse de rotation de la flèche selon la valeur de télémétrie de flèche, d'une cinquième valeur de distance prédéfinie et d'une sixième valeur de distance prédéfinie,
dans lequel l'unité d'obtention d'informations de télémétrie comprend une première unité de télémétrie agencée au niveau d'une table rotative (100) d'un corps de chariot élévateur à fourche, la première unité de télémétrie étant configurée pour obtenir une valeur de télémétrie de table rotative entre la table rotative (100) et un obstacle ; une deuxième unité de télémétrie agencée au niveau d'un châssis du corps de chariot élévateur à fourche, la seconde unité de télémétrie étant configurée pour obtenir une valeur de télémétrie de châssis entre le châssis (200) et l'obstacle ; et une troisième unité de télémétrie agencée au niveau d'une flèche (300) du corps de chariot élévateur à fourche, la troisième unité de télémétrie étant configurée pour obtenir une valeur de télémétrie de flèche entre la flèche (300) et l'obstacle.

8. Chariot élévateur à fourche, comprenant un corps de chariot élévateur à fourche et le système de détection et de commande anticollision pour un chariot élévateur à fourche selon la revendication 7 et le système de détection et de commande anticollision est connecté électriquement au corps de chariot élévateur à fourche.

9. Support de stockage lisible par ordinateur, dans lequel le support de stockage lisible par ordinateur stocke des instructions exécutables par ordinateur pour amener le système de détection et de commande anticollision selon la revendication 7 à exécuter le procédé de détection et de commande anticollision selon l'une quelconque des revendications 1 à 6.
